(19) **Europäisches Patentamt**
**European Patent Office**
**Office européen des brevets**

(11) **EP 2 118 041 B1**

(12) **EUROPEAN PATENT SPECIFICATION**

(45) Date of publication and mention
of the grant of the patent:
**11.11.2015 Bulletin 2015/46**

(51) Int Cl.:
**C04B 41/85** *(2006.01)* **A61K 6/06** *(2006.01)*

(21) Application number: **08729365.0**

(22) Date of filing: **08.02.2008**

(86) International application number:
**PCT/US2008/053393**

(87) International publication number:
**WO 2008/098157 (14.08.2008 Gazette 2008/33)**

(54) **COLOURING OF DENTAL CERAMICS**

EINFÄRBEN VON DETALKERAMIKEN

COLORATION DE CÉRAMIQUES DENTAIRES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **08.02.2007 EP 07002726**

(43) Date of publication of application:
**18.11.2009 Bulletin 2009/47**

(73) Proprietor: **3M Innovative Properties Company
Saint Paul, MN 55133-3427 (US)**

(72) Inventors:
  • **SCHECHNER, Gallus
    82229 Seefeld (DE)**
  • **FISCHER, Anja
    82229 Seefeld (DE)**
  • **FRANKE, Rudiger
    82229 Seefeld (DE)**
  • **SCHNAGL, Robert
    82229 Seefeld (DE)**
  • **HAUPTMANN, Holger
    82229 Seefeld (DE)**

(74) Representative: **Brem, Roland
    3M ESPE AG
    IP Department
    ESPE Platz
    82229 Seefeld (DE)**

(56) References cited:
    **EP-A1- 1 486 476**

    • **DATABASE WPI Week 200356 Derwent
      Publications Ltd., London, GB; AN 2003-590340
      XP002440845 & JP 2002 308620 A (TITANIUM
      KOGYO KK) 23 October 2002 (2002-10-23)**
    • **D S TODOROSXKY ET AL: "Preparation and
      Characterization of Yttrium-iron Citric Acid
      Complexes" CROATICA CHEMICA ACTA, vol. 75,
      no. 1, 2002, pages 155-164, XP002440842**
    • **DATABASE WPI Week 200607 Derwent
      Publications Ltd., London, GB; AN 2006-061383
      XP002440846 & JP 2006 002100 A (NIPPON
      FERRO KK) 5 January 2006 (2006-01-05)**

Remarks:
    The file contains technical information submitted after
    the application was filed and not included in this
    specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The invention relates to the use of a colouring solution for dental ceramic frameworks and a process for using the colouring solution in the dental field. The colouring solution comprises a) a solvent, b) a colouring agent, and c) a complexing agent.

Background of the Invention

Dental ceramic framework can either be coloured by incorporating pigments into the ceramic material or using metal salts containing solutions which are to be applied on the surface of partially sintered dental ceramic framework.
In this respect DE 196 19 168 A1 describes a ceramic colouring solution consisting essentially of water and a palladium containing compound dissolved therein. The solution might further contain co-solvents such as alcohols, glycols, glycol ether or polyethylene glycol.
WO 2004/110959 relates to a colouring solution for ceramic framework. The solution comprises a solvent, a metal salt and polyethylene glycol having a Mn in the range of 1.000 to 200.000.
DE 196 19 165 C1 describes a process for colouring ceramic paving stone with an aqueous solution containing Ti and Fe components together with complexing agents.
WO 00/46168 A1 (corresponding to US 6,709,694 B1) refers to colouring ceramics by way of ionic or complex-containing solutions containing defined concentrations of at least one salts or complexes of the rare earth elements or of the elements of the subgroups. The solution might contain additives like stabilizers, complex builders, pigments and beating additives.
Halogen ions containing aqueous colouring solutions for colouring dental ceramic framework available on the market can have a pH-value below about 1. That is, they can react like strong acids and thus, the solutions have to be treated carefully. Sometimes a labeling as hazardous substance is required.
The present invention is intended to improve the known colouring solutions.

Summary of the Invention

The invention relates to the use of a colouring solution for colouring dental ceramic frameworks. The colouring solution comprises:

- a solvent,

- a complexing agent with Y number of coordinating ligands, the complexing agent being present in an amount of X1 mol and having at least 2 coordinating ligands,

- a colouring agent comprising metal ions, the metal ions being present in an amount of X2 mol,

- wherein the complexing agent is present in an amount sufficient to dissolve the colouring agent in the solvent, and fulfills the equation: X1/X2 * Y > 5 or 5.5 or 6 or 6.5 or 7.

The invention also relates to a process for colouring dental ceramic frameworks. The process comprises the steps of:

- providing a colouring solution as described herein,
- providing a dental ceramic framework,
- treating the ceramic framework with the colouring solution,
- optionally drying the treated ceramic framework and
- optionally firing the treated ceramic framework.

In a further aspect, the invention relates to a process of using a complexing agent for reducing the sintering deformation of dental ceramic framework during firing as described in the claims.
Known colouring solutions available on the market usually contain a certain amount of halogen ions (fluoride, chloride, bromide or iodide) and have a pH-value below 1. Under certain circumstances this could cause problems, e.g. with regard to handling and labeling.
Moreover, the disintegration of the colouring solution at high temperatures during the sintering process may lead to the formation of aggressive substances like chlorine or HCl in the sinter furnace. Without wishing to be bound by any theory, those gases might cause corrosion at the surface of the heating elements and yield other volatile compounds such as $MoCl_6$ or $FeCl_3$ due to the reaction with the material of the heating elements (which may contain e.g. $MoSi_2$ and traces of iron). In some cases, the resulting reaction products may condense or decompose on the surface of the dental ceramic framework to be sintered thus causing discoloration on the surface of the sintered dental ceramic framework after cooling.

This issue could be addressed using solutions that are essentially free of halogen and using metal salts with organic anions, the thermal disintegration of which would only yield non-corrosive gases like water and carbon dioxide. However, simple mixtures, for instance of iron and erbium acetates immediately lead to the precipitation of erbium and/or iron hydroxides.

Without wishing to be bound by any theory, one reason for the poor stability of heavy metal ion mixtures with organic anions may be caused by the basic behaviour of the respective organic anions (e.g. the acetate anion might act as week base at the respective pH values, which may lead to the formation of non soluble hydroxide precipitates). There remains a risk that colouring agents precipitating from the colouring solution could block the pores of the dental ceramic framework (e.g. dental crown, inlay, onlay, veneer or bridge) thus hampering the soaking process.

In addition to avoiding any potential negative effects caused by colouring agents precipitating from the colouring solution, it is also generally desired to have a stable colouring solution that can be stored for many weeks or months.

It has been found that adding a certain amount of a complexing agent to a colouring composition containing a colouring agent and taking into account the nature of the complexing agent, a storage stable composition can be obtained.

The colouring solution remains stable over a considerable long period of time (at least about 4 weeks to more than about 12 months under ambient conditions). They typically do not show any visible precipitation of the colouring agent during storage at ambient conditions (23°C, normal pressure).

In addition, another advantage of the present invention is that in certain implementations the complexing agents and/or counter ions which can be used according to the invention are purely organic substances and thus only contain elements like H, N, O, C, etc., which can be completely burned without leaving any detrimental residues during the sintering process. The thermal disintegration would mainly yield only non-corrosive gases like water, nitrogen or carbon dioxide.

Furthermore, it was found that adding a complexing agent to a colouring solution does not have a detrimental effect on the viscosity.

It was also found that with respect to certain embodiments of the colouring solution a homogeneously coloured dental ceramic framework can be obtained after the sintering process, even without the need for additional additives like polyethylenglycol as suggested in WO 2004/110959.

Moreover, it has been found that under certain conditions dental ceramic framework treated with the colouring solution sometimes shows less defects (e.g. less sintering deformation) after a sintering or firing process compared to dental ceramic framework treated with commercially available colouring solutions.

Thus, using the inventive colouring solution it can be possible to improve the precision fit of wide spanning frameworks (e.g. a dental bridge with more than 3, 4 or 5 units) on prepared tooth structures.

This possible reduction in distortion of the sintered dental framework might also simplify the whole sintering process. It was e.g. found that with respect to some embodiments of the invention, it can be possible to sinter wet items of the dental ceramic framework in the furnace without a significant time delay, e.g. without the need for an additional drying step which usually has to be carried out with conventional commercially available shading liquids. A drying step may last for up to about 3 h. When using the colouring solution a reduction of the sintering cycle time combined with cost savings seems to be achievable. Using solvents having a comparable low vapor pressure like organic solvents such as hydrocarbons might even further reduce the cycle time.

Other embodiments, features and advantages of the present invention will be apparent from the following detailed description, drawings, and claims.

<u>Definitions</u>

The term "dental ceramic framework" within the meaning of the invention is to be understood as any ceramic framework which can be used in the dental field. In this respect, the dental ceramic framework shall have sufficient strength. Examples include inlays, onlays, crowns, abutments and bridges (including 2 parts, 3 parts, 4 parts, 5 parts or 6 parts bridges). The dental ceramic framework has usually a 3-dimensional inner and outer surface including convex and concave structures. Compared to other ceramic framework such as pottery or paving stones, the dental ceramic framework is small and filigree. The thickness of the dental ceramic framework can vary from very thin, e.g. at the edges and rims (below about 0.1 mm) to considerably thick, e.g. in the biting area (up to about 7 mm). Typically, the dental ceramic framework of the invention comprises or essentially consists of a polycrystalline ceramic material comprising $Al_2O_3$ or Yttrium stabilized $ZrO_2$.

A "solvent" within the meaning of the invention is any solvent which is able to at least partially dissolve the colouring agent.

A "colouring agent" within the meaning of the invention is any agent, which is able to lead to a colour change of a dental ceramic framework either right after treatment of the ceramic framework with the colouring agent or after a firing step of the treated ceramic framework.

A "complexing agent" within the meaning of the invention is any agent which is able to form complexes with the colouring agent.

A "complex", also known as coordination compound, in chemistry usually is used to describe molecules or ensembles formed by the combination of ligands and metal ions. Originally, a complex implied a reversible association of molecules, atoms, or ions through weak chemical bonds. As applied to coordination chemistry, this meaning has evolved. Some metal complexes are formed virtually irreversibly and many are bound together by bonds that are quite strong.

The ions or molecules surrounding the metal are called ligands. Ligands are generally bound to a metal ion by a coordinative bonding (donating electrons from a lone electron pair to the Lewis acidic metal center), and are thus said to be coordinated to the ion. Within the meaning of the present invention, those ligands are referred to as "coordinating ligands".

The areas of coordination chemistry can be classified according to the nature of the ligands. Complexes can be classified as "classical" or "organometallic" complexes.

Classical (e.g. so-called "Werner Complexes"): Ligands in classical coordination chemistry bind to metals, almost exclusively, via their "lone pairs" of electrons residing on the main group atoms of the ligand, such as $[Co(EDTA)]^-$] or $[Co(NH_3)_6]Cl_3$.

Organometallic Chemistry: Ligands are organic (alkenes, alkynes, alkyls) as well as "organic-like" ligands, such as $(C_5H_5)Fe(CO)_2CH_3$. It is assumed that those ligands form a direct covalent bond to the metal center.

The term "component A is used in an at least stoichiometric ratio with respect to component B" within the meaning of the invention means that components A and B are used in an at least equimolar amount with respect to each other. That is, the addition of a larger molar amount of component A compared to component B is not excluded.

The term "amount sufficient to dissolve" within the meaning of the invention describes the amount of an agent needed to fully dissolve a certain substance in a certain solvent so that a storage stable composition can be obtained. Storage stable means that the solution stored for a certain period of time at ambient conditions (e.g. at least 3 month, 23 °C) remains stable without decomposition of the solution or precipitation of single or multiple components. The agent might be used in an under-stoichiometric amount (e.g. 0.1 mol agent, 0.5 mol substance), equal amount (e.g. 0.1 mol agent, 0.1 mol substance), or even in excess (e.g. 0.2 mol agent, 0.1 mol substance). The time needed to dissolve the substance is not particularly limited, however, the dissolution should occur within a reasonable time (e.g. 5 min to 24 h) using common equipment like mechanical stirrers and heaters.

Rare earth elements and/or of the subgroups of the rare earth elements include Ce, Pr, Nd, Sm, Eu, Gd, Tb, Dy, Ho, Er, Tm, Yb and Lu.

Transition metals of the groups IIIA, IVA, VA, VIA, VIIA, VIIIA, IB, IIB comprise the metals listed in the columns of the Periodic Table of Elements starting with the elements Sc, Ti, V, Cr, Mn, Fe, Co, Ni, Cu and Zn and the metals listed below those elements.

A dental ceramic framework is classified as "presintered" within the meaning of the invention if the dental ceramic framework has been treated with heat (temperature range from 900 to 1100°C) for 1 to 3 hours to such an extend that the raw breaking resistance of the dental ceramic framework measured according to the "punch on three ball test" ISO 6872 is within a range of 15 to 55 MPa or 30 to 50 MPa. A presintered dental ceramic framework usually has a porous structure and its density (usually 3.0 g/cm$^3$ for an Yttrium stabilized $ZrO_2$ ceramic) is less compared to a completely sintered dental ceramic framework (usually 6.1 g/cm$^3$ for an Yttrium stabilized $ZrO_2$ ceramic).

A dental ceramic framework is classified as "absorbent" within the meaning of the invention if the dental ceramic framework is able to absorb a certain amount of a solvent, comparable to a sponge. The amount of solvent which can be absorbed depends e.g. on the chemical nature of the dental ceramic framework, the viscosity of the solvent, the porosity and pore volume of the dental ceramic framework.

The term "sintering deformation" within the meaning of the invention describes the change of the geometrical shape of a dental ceramic framework which might occur during a sintering process caused e.g. by inhomogeneity of the material the dental ceramic framework is made of. A sintering deformation of a dental ceramic framework might occur only in one dimension or in two or in three dimensions. The sintering deformation can be measured comparing the shape of the dental ceramic framework before and after a sintering process. The difference in shape can either be measured by an accurate geometrical measurement of the dental ceramic framework using e.g. a microscope or by examining the precision fit of a dental ceramic framework on a model as described in the text below. A test which can be used for the evaluating of the deformation of the coloured ceramic framework after sintering is as follows: A rod-shaped sample is processed similar to a Lava™ bridge (milling, dyeing and sintering) with a commercially available Lava™ equipment.

The presintered sample (Lava™ Frame blank for bridges) is milled, thereafter the dust is removed with microbrushes and compressed air. The milled sample is dipped in the colouring solution for about two minutes. After that any excessively adhering dyeing liquid is removed with an absorbent paper. The sample is placed on two Lava™ sintering supports (20 mm distance) for posterior bridges (curved platinum wire). The proportion between sample length and distance between the wires is like the sintering of a bridge. The firing can be done in a Lava™ Therm furnace with the standard sintering program. After sintering the deformation of the samples is measured with a profile projector.

The term "precision fit" within the meaning of the invention describes the exactness a dental ceramic framework fits to a prepared model, i.e. whether to which extend the internal surface of dental ceramic framework matches with the external surface of tooth structure such as a prepared tooth stump. Especially with regard to wide spanning dental bridges this can be an important feature a dental ceramic framework should fulfil to avoid a move back-and-force or up-and-down of the bridge to be fixed on two tooth stumps.

A dental ceramic framework can be characterized as "homogeneously coloured" within the meaning of the invention, if no colour spots can be identified with the human eye on the surface of the dental ceramic framework after the sintering process. More precisely, this can be proven using a commercially available Hunter Lab System. The homogeneity can be measured according to DIN 5033 Measurement of Colours; Parts 1-8 (Normvalenz-System, L*a*b*-Farbraum nach CIE, 1976); DIN 6174 Farbmetrische Bestimmung von Farbabständen bei Körperfarben nach der CIE-LAB-Formel; DIN 55981 (ISO 787-25) Farbabstandsbestimmung $\Delta E^*$ using standard operating procedures according to the manufacturer's operation manual (Hunter Lab., Corp.) to determine the sample dimension, the calibration and measure procedure. Further hints to this measuring system can also be found in DE 100 52 203 A1 on page 3, line 56 to page 4, line 6 (corresponding to US 6,756,421, column 4, lines 26 to 55).

A solution can be classified as "storage stable" within the meaning of the invention, if it remains stable over a considerable long period of time (at least 4 weeks to more than 12 months under ambient conditions). A storage stable solution typically does not show any visible (visible to the human eye) precipitation of the colouring agent during storage at ambient conditions (23°C, 1013 mbar).

"Ambient conditions" within the meaning of the invention mean the conditions which the inventive solution is usually subjected to during storage and handling. Ambient conditions may, for example, be a pressure of 900 to 1100 mbar, a temperature of -10 to 60 °C and a relative humidity of 10 to 100 %. In the laboratory ambient conditions are adjusted to 23 °C and 1013 mbar.

As used herein, "a", "an", "the", "at least one" and "one or more" are used interchangeably. The terms "comprises" or "contains" and variations thereof do not have a limiting meaning where these terms appear in the description and claims. Also herein, the recitations of numerical ranges by endpoints include all numbers subsumed within that range (e.g., 1 to 5 includes 1, 1.5, 2, 2.75, 3, 3.80, 4, 5, etc.).

Brief Description of the Drawings

Fig. 1    shows four pieces of distorted sintered dental ceramic framework (test bar) on supporting structures.

Fig. 2    graphically shows how the distortion of dental ceramic framework was determined.

Fig. 3    shows a box plot of the measured values.

Detailed Description of the Invention

The colouring solution comprises a solvent. The solvent should be able to at least partially dissolve the components of the composition, especially the colouring agent(s) selected. Typical solvents which can be used either alone or in admixture include water, alcohols like methyl alcohol, ethyl alcohol, iso-propyl alcohol, n-propyl alcohol, polar aprotic liquids like ketones such as acetone, ethylacetate and mixtures of water with alcohols and/or ketones. Preferred solvents which can be used in pure form include e.g. water and alcohols. Examples of useful mixtures of solvents include water and ethyl alcohol. These solvents are especially useful for polar complexes. For nonpolar complexes, solvents like ethers (including diethylether, THF) or hydrocarbons (including pentane, hexane, heptane and octane; including its n-, sec-, tert-isomers) can be used.

The amount of solvent used is not particularly limited unless the result to be achieved cannot be obtained. A typical colouring solution according to the invention contains at least 60 wt.-% solvent or least 75 wt.-% solvent or least 90 wt.-% solvent with respect to the weight of the whole composition.

The colouring solution also comprises a colouring agent, which comprises metal ions. Metals which can be used include those listed in the Periodic Table of Elements and are classified as rare earth elements (including Ce, Pr, Nd, Sm, Eu, Gd, Tb, Dy, Ho, Er, Tm, Yb and Lu) and/or of the subgroups of the rare earth elements and/or salts of transition metals of the groups IIIA, IVA, VA, VIA, VIIA, VIIIA, IB, IIB. Metals which were found to be especially useful for the purpose of the invention include Fe, Mn, Er and Pr. The metals can be used either alone or in admixture with other metals.

Usually, the colouring agent is a salt comprising cations and anions. Anions which were found to be useful include $OAc^-$ (Y =1), $NO_3^-$ (Y =1), $NO_2^-$ (Y =1)$^-$, $CO_3^{2-}$ (Y =1), $HCO_3^-$ (Y =1), $ONC^-$ (Y =1), $SCN^-$ (Y =1), $SO_4^{2}$(Y =1)$^-$, $SO_3^{2-}$ (Y =1), gluturate (Y =2), lactate (Y =1), gluconate (Y = 1), propionate (Y =1), butyrate (Y =1), glucuronate (Y = 1), benzoate (Y =1), phenolate (Y =1), wherein Y indicates the number of complexing ligands being present in the anion.

Some of the ions mentioned above have more than 1 or 2 complexing ligands within the meaning of the invention. However, other anions might also be used containing more than 2 complexing ligands within the meaning of the invention, such as citrate (Y = 3). Thus, the anion can fulfill two functions. First, it can act as a counter ion to the metal ion being present in the colouring agent, second, it can act as complexing agent.

Specific examples of colouring agents which can be used for the inventive colouring solution include acetates, carbonates and gluconates of Er, Fe, Mn and Pr.

The amount of colouring agent used is not particularly limited unless the result to be achieved cannot be obtained. The metal ions are contained in the solution in an amount sufficient to achieve an adequate colouring of the ceramic framework.

Good results can be achieved e.g. with amounts in the range of 0.01 to 15.0 % by weight of metal ions, or in the range of 0.1 to 10.0 % by weight, or in the range of 0.1 to 7.0 % by weight or in the range of 0.1 to 5.0 % by weight with respect to the weight of the whole composition.

The colouring solution also comprises a complexing agent in any desired amount. Typically, the complexing agent is present in the solution in an amount sufficient to dissolve the colouring agent in the solvent or to prevent precipitation of the colouring agent. The complexing agent can be present in an amount of at least about 2 % by weight or at least about 5 % by weight or at least about 15% by weight with respect to the amount of the whole composition. There is no upper limit, however, usually the amount of complexing agent used does not exceed an amount of about 60 % by weight or about 50 % by weight or about 40 % by weight with respect to the amount of the whole composition.

E.g., the complexing agent can be used in a stoichiometric ratio with respect to the molar amount of the ions contained in the colouring agent.

Good results can be achieved, if the ratio of molar amount of complexing agent to the molar amount of metal ion being present in the colouring agent is equal to or greater than about 1 or about 2 or about 3.

The complexing agent is usually added as a separate component of the composition. However, it can also be added as part of the colouring component, e.g. as counter ion to the metal ion being present in the colouring component. Examples include citrate and ascorbate.

Without wishing to be bound by any theory, it is assumed that the complexing agent is able to form a complex with the metal ion(s) of the colouring agent assisting the colouring agent in dissolving in the chosen solvent and preventing the colouring agent from precipitating from the solution especially during storage.

The complexing agent possibly forming a complex with the metal of the colouring agent can have different structures. The geometry usually depends on the "coordination number", the number of ligands attached to the metal. Usually one can count the ligands attached but sometimes even the counting can become ambiguous. Coordination numbers are normally between two and twelve, but large numbers of ligands are not uncommon. The number of bonds depends on the size, charge, and electron configuration of the metal ion. Most metal ions may have more than one coordination number.

Different ligand structural arrangements result from the coordination number. Most structures follow the points-on-a-sphere pattern (or, as if the central atom were in the middle of a polyhedron where the corners of that shape are the locations of the ligands), where orbital overlap (between ligand and metal orbitals) and ligand-ligand repulsions tend to lead to certain regular geometries.

The most observed geometries are listed below, but there are many cases which deviate from a regular geometry, e.g. due to the use of ligands of different types (which results in irregular bond lengths; the coordination atoms do not follow a points-on-a-sphere pattern), due to the size of ligands, or due to electronic effects:

- Linear for two-coordination,

- Trigonal planar for three-coordination,

- Tetrahedral or square planar for four-coordination

- Trigonal bipyramidal or square pyramidal for five-coordination,

- Octahedral (orthogonal) or trigonal prismatic for six-coordination,

- Pentagonal bipyramidal for seven-coordination,

- Square antiprismatic for eight-coordination, and

- Tri-capped trigonal prismatic (Triaugmented triangular prism) for nine coordination.

The arrangement of the ligands is usually fixed for a given complex, but in some cases it is mutable by a reaction that forms another stable isomer.

Typical isomerism which can occur is listed below:

Stereoisomerism occurs with the same bonds in different orientations relative to one another. Stereoisomerism can be further classified into:

- geometric isomerism occurs in octahedral and square planar complexes (but not tetrahedral). When two ligands are opposite each other they are said to be trans, when mutually adjacent, cis. When three identical ligands occupy one face of an octahedron, the isomer is said to be facial, or fac. If these three ligands are coplanar, the isomer is said to be meridional, or mer. For example, in an octahedral compound with three of one ligand and three of another, there are two geometric isomers: the mer in which each set of three same ligands is in a meridian and the fac in which each set of three is on a face of the octahedron.
- optical isomerism occurs when the mirror image of a compound is not superimposable with the original compound. It is so called because such isomers are optically active, that is, they rotate the plane of polarized light.

Structural isomerism occurs when the bonds are themselves different. Linkage isomerism is only one of several types of structural isomerism in coordination complexes (as well as other classes of chemical compounds). Linkage isomerism, as described above, occurs with ambidentate ligands which can bind in more than one place.

The increased stability of a chelated complex is called the chelate effect. In this respect, the complexing agent can also be characterized as a chelating agent (or a polydentate ligand), which can bond to more than one coordination site on the central atom. Because it is necessary to break all of the bonds to the central atom for the ligand to be completely displaced, it requires more energy to increase the number of separate molecules. If a chelate were replaced by several monodentate ligands (such as water or ammonia), the total number of molecules would decrease, whereas if several monodentate ligands were replaced by a chelate, the number of free molecules increases. The effect is therefore entropic in that more sites are used by less ligands and this leaves more unbonded molecules: a total increase in the number of molecules in solution and a corresponding increase in entropy.

It was found that good results can be achieved using complexing agents having at least 2, 3, 4, 5 or 6 coordinating ligands.

A coordinating ligand within the meaning of the invention is defined as a position within a molecular structure being able to interact with a metal ion. This interaction often leads to the formation of a complex structure as outlined above.

According to the present invention the complexing agents are classified as follows:

- Complexing agents with 6 coordinating ligands (Y = 6) include EDTA (ethylene diamine tetra acetic acid); 18-crown-6; 2,2,2-crypatand; polymeric ligands like poly acrylate, poly asparagate, acidic peptides with an "infinite" number of coordinating ligands are counted as complexing agents with 6 coordinating ligands.

- Complexing agents with 5 coordinating ligands (Y = 5) include 15-crown-5; cyclo-pentadien.

- Complexing agents with 4 coordinating ligands (Y = 4) include NTA (nitrilotriacetate); 12-crown-4; triethylentetramine; porphin$^{2-}$; phthalocyanin$^{2-}$ bis(salicilate)ethylenbis(imin)salen$^{2-}$.

- Complexing agents with 3 coordinating ligands (Y = 3) include $C_3H_5O(COO)_3^{3-}$.

- Complexing agents with 2 coordinating ligands (Y = 2) include $HC_6H_5O_7^{2-}$; salicylate, glycinate; lactate; acetylacetonate; propylendiamine; ascorbate $C_6H_6O_6^{2-}$; $C_3H_5O(COOH)(COO)_2^{2-}$.

A citrate is an ionic form of citric acid, such as $C_3H_5O(COO)_3^{3-}$, that is, citric acid minus three hydrogen ions. Citrates are compounds containing this group, either ionic compounds, the salts, or analogous covalent compounds, esters. Since citric acid is a tribasic acid, intermediate ions exist, hydrogen citrate ion, $HC_6H_5O_7^{2-}$ and dihydrogen citrate ion, $H_2C_6H_5O_7^{-}$. These may form salts as well, called acid salts. Salts of the hydrogen citrate ions are weakly acidic, while salts of the citrate ion itself (with an inert cation such as sodium ion) are weakly basic.

In general, in aqueous systems complexing agents having anionic groups as complexing ligands are preferred. At least parts of the complexing ligands should be anionic. Complexing agents having only uncharged complexing ligands (or even cationic ligands) like pure amines (e.g. ethylendiamin at pH values at 8 to 14) might yield not sufficiently stable solutions.

According to the invention the complexing agent is present in an amount sufficient to dissolve the colouring agent in the solvent, and fulfills the equation: $X1/X2 * Y$ greater than 5.5 or greater than or equal to 6 or greater than or equal to 6.5 or greater than or equal to 7, with X1 being the amount of the complexing agent in [mol], X2 being the amount of the metal ions being present the colouring agent in [mol] and Y being the number of coordinating ligands of the complexing agent used.

If the colouring solution contains more than one colouring agent, especially if more than one kind of metal ion is present, then the individual amounts of metal ions have to be added up. E.g., if the colouring solution contains 1 mol $FeCl_3$ and 2 mol $ErAc_3$, then X2 is 3.

If the colouring solution contains a certain amount of a specific complexing agent and a colouring agent, wherein the counter ion to the metal ion being present in the colouring agent can act as a complexing agent (such as citrate), then the amounts of complexing agent and the anion of the colouring agent have to be added up, too. E.g., if 1 mol of EDTA is used together with 1 mol iron citrate, then X1 is 2.

Thus, for colouring solutions containing two types of complexing agents a and b, the calculation of the X1/X2*Y value is given by the equation:

$$(X1a*Ya + X1b*Yb)/X2,$$

with X1 a being the molar concentration of the complexing agent a, X1 b being the molar concentration of the complexing agent b, Ya being the number of complexing ligands of complexing agent a, Yb being the number of complexing ligands of complexing agent b, and X2 being the molar concentration of all colouring metal cations.

A similar calculation can be applied, if more than two sources of complexing agents are used. For these embodiments the formula above can be summarized more generally as follows:

$X1_n/X2_m * Y_n$ greater than 5.5, or greater than or equal to 6 or greater than or equal to 6.5 or greater than or equal to 7,

with $X1_n$ being the amount of the complexing agent n used in mol,

$X2_m$ being the amount of the metal ions m being present in the colouring agent in mol and

$Y_n$ being the number of coordinating ligands of the complexing agent n used,

with n being an integer and indicating the number of complexing agents being present in the colouring solution and

m being an integer and indicating the number of metal ions being present in the colouring solution.

The colouring solution can also comprise additives like stabilizers (including methoxy phenol hydrochinone or Topanol A), temporary binders, buffers (including acetate or amino buffers) or thixotropic substances (including polysaccharides, poly vinyl alcohols, polyethylenglycols, cellulose derivatives).

There is no need that any of these additives is present, however, they can be present. If they are present (that is, the amount of additive is greater than about 0.01 % by weight), they are usually present in an amount up to about 4 % by weight or up to about 6 % by weight or up to about 12 % by weight with respect to the weight of the whole composition.

The pH-value of the colouring solution comprising water as a solvent is not particularly limited. Examples of useful pH-values are equal or greater than 2 or 3 or 4 or 5 or 6 or 7 or 8 or 9. Thus, the pH-value can be in a range of 2 to 9 or in the range of 3 to 8. Measurement of the pH-value can be achieved by means known by the person skilled in art. E.g. an instrument like Metrohm™ 826 or pH mobile indicator paper can be used.

In a preferred embodiment the coloring solution is transparent. A solution can be characterized as transparent within the meaning of the invention if a beam of visible light (400 to 700 nm) is not scattered by the solution and cannot be observed by side view (no Tyndal effect). However, the intensity of the penetrating beam of visible light in direction of the beam may be weakened due to absorption of the light by the colouring metal ions.

According to one embodiment, the colouring solution can comprise

• a solvent in an amount of 30 to 96 or in an amount of 50 to 94 or in an amount of 55 to 90 % by weight,

- a colouring agent comprising metal ions in an amount of 0.1 to 20 or in an amount of 0.5 to 10 or in an amount of 0.9 to 5.0 % by weight,

- a complexing agent in an amount of 2 to 60 or in an amount of 5 to 50 or in an amount of 15 to 40 % by weight, and

- optionally additives (like e.g. stabilizers, temporary binders, buffers and/or thixotropic substances) in an amount of 0.1 to 12 or in an amount of 1 to 6 or in an amount of 2 to 4 % by weight,
  with respect to the weight of the whole composition.

The invention also relates to a process of using the colouring solution, the process comprising the steps of

- providing a colouring solution as described in the text of the invention,
- providing a dental ceramic framework,
- treating the dental ceramic framework with the colouring solution,
- optionally drying the treated dental ceramic framework,
- optionally firing the treated dental ceramic framework.

Colouring the dental ceramic framework is usually achieved by dipping the framework into the solution. However, the solution can also be applied to the dental ceramic framework by spraying, brushing, painting or by using a sponge or fabric.

The dental ceramic framework is usually treated with the solution for 1 to 5 minutes, preferably from 2 to 3 minutes at room temperature (about 23 °C).

Preferably no pressure is used.

The colouring solution should have an adequate viscosity so that sufficient wetting of and penetration into the pores of the dental ceramic framework can be achieved. Good results can be obtained with a solution having a dynamic viscosity of 1.0 mPa*s up to 100 mPa*s or up to 80 mPa*s or up to 60mPa*s, measured according to description below. E.g., for the colouring solution Nr. 2 (see table below) a viscosity of about 1.8 +/-0.3 mPa*s was determined.

The dynamic viscosity can be determined with an Physica MCR301 instrument using a cone plate geometry, diameter 50 mm, angle (cone) 1 °, at 23°C. A typical shear rate is 200 rounds/s, however, generally the viscosity of liquids is independent from the shear rate in a wide range.

If the viscosity of the colouring solution is too high, the colour value is too bright. If the viscosity of the colouring solution is to low, the colour value is not homogenous.

A penetration depth of the colouring solution into the dental ceramic framework of about 5 mm is considered to be sufficient. The penetration depth can be determined as follows:

A plastic mesh (mesh size 500 $\mu$m) is located in a flat cup, which is filled with a colouring solution containing in addition a certain amount of an organic colourant (e.g. 100 ppm of Rhodamin B). A test bar of a presintered dental ceramic framework (LAVA™ Frame; 3M ESPE) having a size of Ø= about 24 mm, height = 30 mm is placed on the plastic mesh and is soaked with the colouring solution for 2 min; dipping depth: 5 mm. The dental ceramic framework is taken out of the solution and is cutted into slices. The cutting edges are finished and the penetration of the solution into the dental ceramic framework is analysed with a fluorescence microscope. If the added organic colourant can be detected over the whole range of the dipping depth and not only in a small border area (about 2 mm), the penetration behaviour of the solution is considered to meet the practitioner's needs.

Drying the coloured dental ceramic framework is not absolute necessary, but can be preferred to reduce the time needed for firing and to avoid undesired inhomogenous colour effects. Drying can be effected by simply storing the dental ceramic framework on a surface at ambient conditions for a couple of hours (about 1 to about 3 hours).

The firing conditions are dependant on the ceramic material used. A furnace which can be used is the commercially available LAVA™ Therm (3M ESPE). During the firing process the coloured dental ceramic framework is sintered to its final shape, thereby undergoing changes with regard to dimension, density, hardness, raw breaking resistance and/or grain size.

The firing usually takes place for a $ZrO_2$ based ceramic at a temperature above about 1300 °C, preferably above about 1400 °C, more preferably above about 1450 °C and lasts for at least about 0.5 h, preferably for at least about 1 h, more preferably for at least about 2 h.

For an $Al_2O_3$ based ceramic the firing usually takes place at a temperature above about 1350 °C, preferably above about 1450 °C, more preferably above about 1650 °C and lasts for at least about 0.5 h, preferably for at least about 1 h, more preferably for at least about 2 h.

The colouring solution does not necessarily comprise any organic colorants or colouring means that will only tint the surface but not the bulk, like pigments. If possible, the colouring solution should not or only contain a small amount of ingredients which can be detrimental to the firing equipment during the sintering process, like halogen (fluorine, chlorine, bromine or iodine). In this respect the amount of halogen ions contained in the colouring solution should be kept low, e.g. below about 1 wt.-% or below about 0.1 wt.-% or below about 0.01 wt.-% with respect to the weight of the whole composition. There is also no need for the addition of polyethylene glycol in order to improve the sintering deformation. Thus, the colouring solution can be essentially free of polyethylenglycol. An amount of less than about 1 wt.-% or less than about 0.1 wt.-% or less than about 0.01 wt.-% is defined as essentially free.

The colouring solution can be applied to presintered ceramic bodies of various compositions, especially such comprising or preferably consisting essentially of $ZrO_2$ and/or $Al_2O_3$, respectively. These compositions are known to the skilled person in the art (examples of useful compositions are described e.g. in WO 00/46168 A1). The $ZrO_2$ is preferably stabilized with $Y_2O_3$.

The invention is hereinafter described by examples.

Examples

Measurements

pH-Value

The pH-value was determined using a mobile pH-indicator paper available from Merck KGaA, Darmstadt Germany (pH 0-14, pH indicator strips, non bleeding, Art. Nr. 1.09535.0001)

Storage Stability

The solution prepared according to the description below was stored for 24 hours at ambient conditions (23°C) and hereinafter visually analyzed with respect to precipitation.

Sintering Distortion

Bars of commercially available pre-sintered LAVA™ Frame Zirconia material (material as described before) with a size of 41.0 x 4.0 x 3.0 mm were prepared by using a commercial available LAVA™ milling unit. 2 grooves perpendicular to the long axis of the bar were prepared on the 4 mm side of the bar in a distance of 30 mm of each other. Since the grooves were placed symmetrically with respect to the long axis of the bar, the distance of each groove to the end of the bar was 5.5 mm (in direction long axis). The grooves were prepared with a tool holder for grinding wheels using a Soflex disk of 0.5 mm thickness and approx. 15 mm diameter of the grinding wheel. The respective groove had approx 0.4 mm width and 0.1 mm depth. Dust was removed of the surface by applying a compressed air stream. The bars were then submerged in the respective colouring solution for about 120 s. Excessive liquid on the surface of the bars was removed gently with cellulose.

The prepared bars were placed on platinum wire sinter appliances (swing form, 3M ESPE item number 78990244697, diameter of "swing" wire 0.32 mm, supporting wire 0.65 mm, height of whole appliance approx. 35 mm) so that the wires were fixed within the above mentioned grooves. The sinter appliances themselves were placed in a honeycomb like sinter support carrier of mullite to ensure sufficient mechanical stability during sintering (diameter of hollow combs approx. 1.85 mm, height approx. 11.5 mm). Sinter support carries are commercially available (e.g. 3M ESPE; item number 78990243988). Whereas the lower part of the sintering appliance is more or less fixed and only slightly movable in the support carrier, the upper part is freely movable like a swing as described in WO 2006/108677 A1, Fig. 4. The honeycomb body was placed in a bowl of mullite. The resulting height of the bar over the honeycomb alumina sinter support was approx. 10 mm) The bars were then subjected to typical sintering process used for LAVA™ zirconia dental material (3.5 h drying at room temperature, heating up to 1500°C with a heating rate of 10°C/min, holding at 1500°C for 2h and passive cooling to room temperature, overall cycle time approx. 11 h). The obtained zirconia materials were fully dense and corresponded to the typical LAVA™ material.

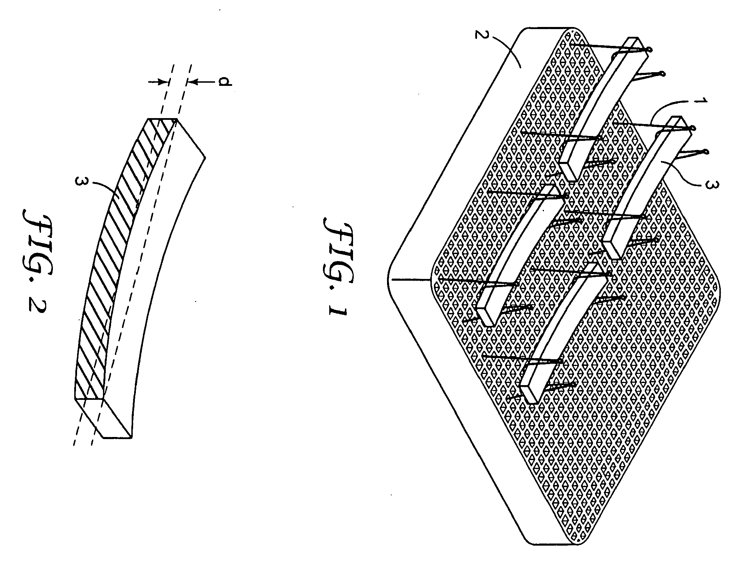

In Fig. 1 schematically shows how the sintering of the ceramic framework was accomplished. The sinter appliances (1) are placed in a support carrier (2) and the test bar (3) placed on the sinter appliances (1). The test bar (1) is slightly deformed after the sintering process. In the embodiment according to Fig. 1 four individual test bars are sintered simultaneously.

Fig. 2 graphically shows how the distortion was determined. The distortion was measured with a calibrated optical measuring microscope (Measuring Microscope Nikon MM-40). The respective zirconia test bar (3) was closely applied to the measuring bar of the microscope that was fixed parallel to the horizontal measuring line of the microscope. The test bar typically had contact to the measuring bar at its two ends (with respect to the long axis of the test bar). The vertical adjustable measuring line of the microscope was exactly adjusted to the measuring bar and the zero point was set. The measuring line then was adjusted to the point of the edge of the test bar (inner side of the test bar facing to the measuring bar) that showed the largest distance to the measuring bar of the microscope. In general, the point of largest distance between test bar and measuring bar was right in the middle of the long axis of the test bar. The distance (d) between zero point and point of largest distance was determined and used as a parameter for the sintering deformation. The measured values are given in Table 1 below.

Examples

A certain amount of complexing agent was dissolved in a certain amount of solvent and a certain amount of a first colouring agent was added under stirring. Hereinafter a certain amount of a second colouring agent (if any) was added under stirring at 23 °C.

The water used was de-ionized water. The complexing and colouring agents used were obtained from and are commercially available at Sigma Aldrich Co. or ABCR GmbH & CO.KG (Karlsruhe, Germany).

Solutions Nos. 2 to 8 were prepared accordingly and the storage stability and pH-value determined. Colouring solution No. 0 is commercially available as FS5 LAVA™ Frame Shade dying Liquid (3M ESPE). Colouring solution No. 1 is commercially available as FS4 LAVA™ Frame Shade dying Liquid (3M ESPE; item number 68577).

Solutions 1, 2, 3, 5 and 7 were tested with respect of their capability for reducing sintering distortion. The value given in brackets is the standard deviation.

Table 1

| | Complexing Agent X1[2] [mol/l] Y[1] or Ya[7] (if applicable) | Colouring Agent X2[3] [mol/l] Yb[7] (if applicable) | Colouring Agent X2[3] [mol/l] | Solvent | Ratio[4]: (X1)/ (X2) | Precipitation (yes/no) | pH-value | X1/ X2 * Y | Distorion [mm] |
|---|---|---|---|---|---|---|---|---|---|
| 0* | n.a. | $FeCl_3$ 0.097 | $ErCl_3$ 0.088 | water | n.a. | No | 1 | n.a. | 0.080 (0.009) |
| 1 * | n.a. | $FeCl_3$ 0.124 | $ErCl_3$ 0.289 | water | n.a. | No | 1 | n.a. | 0.086 (0.093) |
| 2 | EDTA[6] 0.455 Y=6 | Fe(III)citrate 0.124 | $ErAc_3$ 0.289 | water | 1.1 | No | 5 | 7.5 | 0.065 (0.0081) |
| 3 | EDTA[6] 0.455 Y=6 | Fe(III)citrate 0.124 | $Er_2(CO_3)_3$ 0.289 | water | 1.1 | No | 5 | 7.5 | 0.046 (0.0041) |
| 4* | EDTA[6] 0.207 Y=6 | Fe(III)citrate 0.124 | $ErAc_3$ 0.289 | water | 0.5 | Yes | 5 | 3.9 | n.m |
| 5 | $(NH_4)_2$H-citrate 1.36 Y=3 | Fe(III)citrate 0.124 | $ErAc_3$ 0.289 | water | 3.3 | No | 5 | 10.8 | 0.060 (0.0034) |
| 6* | $(NH_4)_2$H-citrate 0.455 Y=3 | Fe(III)citrate 0.124 | $ErAc_3$ 0.289 | water | 1.1 | Yes | 5 | 4.2 | n.m |
| 7 | NTA[5] 0.910 Y=4 | Fe(III)citrate 0.124 | $Er_2(CO_3)_3$ 0.289 | water | 2.2 | No | 9 | 9.7 | 0.054 (0.0048) |
| 8 * | NTA[5] 0.455 Y=4 | Fe(III)citrate 0.124 | $Er_2(CO_3)_3$ 0.289 | water | 1.1 | Yes | 9 | 5.3 | n.m |

*comparative

[1] Y indicates the number of coordinating ligands of the complexing agent.

[2] X1 indicates the amount of complexing agent used.

[3] X2 indicates the amount of metal ions [mol] being present in the colouring agent(s).

[4] Ratio: amount of complexing agent (X1) [mol] to amount metal ions [mol] of colouring agent (X2)

[5] NTA was deprotonated and solubilised with $NH_3$ conc. before adding Er and Fe salts.

[6] EDTA was applied as diammonium salt $(NH_4)_2$*EDTA.

[7] In addition to the added complexing agents (EDTA, NTA, citrate), the citrate introduced by using e.g. Fe(III)citrate was considered when calculating the value for X1/X2*Y.

For colouring solutions containing two types of complexing agents a and b, the calculation of the X1/X2*Y value is given by the equation: (X1a*Ya + X1b*Yb)/X2, with X1 a being the molar concentration of the complexing agent a, X1 b being the molar concentration of the complexing agent b, Ya being the number of complexing ligands of complexing agent a, Yb being the number of complexing ligands of complexing agent b, and X2 being the molar concentration of all colouring metal cations.

Thus, the value for X1/X2*Y for the solution of Example 2 (Table 1) is obtained as follows:

[0.455mol/L *6 + 0.124mol/L *3] / [0.124mol/L + 0.289mol/L] = 7.5

n.a.: not applicable

n.m.: not measured, due to storage instability of the solution

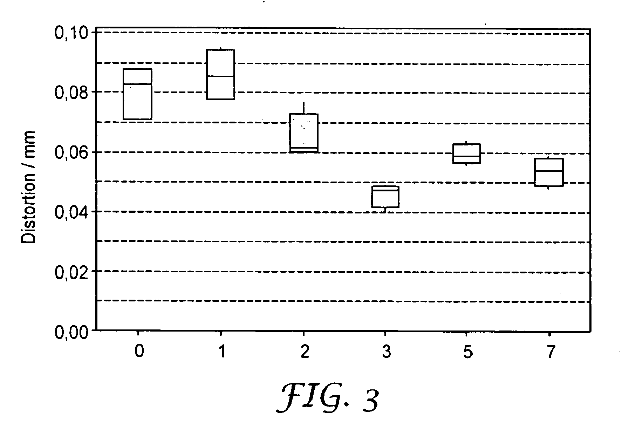

Fig. 3 graphically shows the results obtained using different colouring solutions (box plot). Four individual measurements were done for each colouring solution and the mean value determined. The line in the box represents the mean value. The size of the box indicates the standard deviation. The measured values (y-axis) are given in mm. The number of the colouring solution (x-axis) corresponds to the numbering given in Table 1 above.

## Claims

1. Use of a colouring solution comprising:

   • a solvent,
   • a complexing agent with Y number of coordinating ligands, the complexing agent being present in an amount of X1 mol and having at least 2 coordinating ligands,
   • a colouring agent comprising metal ions, the metal ions being present in an amount of X2 mol,
   wherein the complexing agent is present in an amount sufficient to dissolve the colouring agent in the solvent, and fulfills the equation: $X1/X2 * Y > 5.5$ for colouring a dental ceramic framework.

2. The use according to claim 1, wherein the complexing agent is used in an at least stoichiometric ratio with respect to the metal ions present in the colouring agent.

3. The use according to any of the preceding claims, wherein the complexing agent is selected from the group consisting of crown ethers, cryptands, ethylenediaminetriacetate and its salts, ethylenediaminetetraacetate (EDTA) and its salts, nitrilotriacetate (NTA) and its salts, citric acid and its salts, triethylentetramine and porphin.

4. The use according to any of the preceding claims, wherein the colouring agent comprises atoms of the group consisting of rare earth elements and/or of the subgroups of the rare earth elements and/or salts of transition metals of the groups IIIA, IVA, VA, VIA, VIIA, VIIIA, IB and/or IIB.

5. The use according to any of the preceding claims, wherein the colouring agent is a salt comprising metal cations and anions, wherein the anions are selected from the group consisting of $OAc^-$, $NO_3^-$, $NO_2^-$, $CO_3^{2-}$, $HCO_3^-$, $ONC^-$, $SCN^-$, $SO_4^{2}$, $SO_3^{2-}$, gluturate, lactate, gluconate, propionate, butyrate, glucuronate, benzoate and phenolate.

6. The use according to any of the preceding claims, wherein the solvent is selected from the group consisting of water, alcohols or dipolar aprotic liquids, apolar liquids or mixtures of water with alcohols and/or dipolar aprotic liquids.

7. The use according to any of the preceding claims the colouring solution having at least one of the following features:

   • dynamic viscosity of below 100 mPa*s at 23 °C,
   • for water containing solutions a pH-value in the range of between 2 to 9,
   • transparent to visible light.

8. The use according to any of the preceding claims, wherein the colouring solution comprises less than 1 % by weight of halogen.

9. The use according to any of the preceding claims the colouring solution comprising

   a) a solvent in an amount of 30 to 96 % by weight,

b) a colouring agent comprising metal ions in an amount of 0.1 to 20 % by weight,
c) a complexing agent with at least 3 complexing positions in an amount of 2 to 60 % by weight, and
d) optionally additives in an amount of 0.1 to 12 % by weight.

10. A use as described in any of the proceeding claims, wherein the solvent comprises water, the colouring agent comprises Er-, Pr- and/or Fe-salts and the complexing agent comprises EDTA.

11. A process of colouring a dental ceramic framework and/or of reducing the sintering distortion of a dental ceramic framework comprising the steps of

a) providing a colouring solution as described in anyone of the preceding claims,
b) providing a dental ceramic framework,
c) treating the ceramic framework with the solution of a),
d) optionally drying the treated ceramic framework, and
e) optionally firing the treated ceramic framework.

12. The process according to claim 11, wherein the dental ceramic framework comprises $ZrO_2$ and/or $Al_2O_3$.

13. The process according to claim 12 the dental ceramic framework having the shape of a crown, inlay, onlay, abutment or bridge.

14. The process according to any of claims 12 or 13, wherein the ceramic is presintered.

15. Use of a complexing agent for reducing the sintering distortion of dental ceramic framework during firing, the use comprising the step of treating partially sintered ceramic framework with a colouring solution as described in any of claims 1 to 10 and sintering the partially sintered ceramic framework to full density.

**Patentansprüche**

1. Verwendung einer Färbelösung, die Folgendes umfasst:

• ein Lösungsmittel,
• einen Komplexbildner mit einer Anzahl Y an koordinierenden Liganden, wobei der Komplexbildner in einer Menge von X1 Mol vorliegt und mindestens 2 koordinierende Liganden aufweist,
• ein Färbemittel, das Metallionen umfasst, wobei die Metallionen in einer Menge von X2 Mol vorliegen,
wobei der Komplexbildner in einer Menge vorliegt, die dazu ausreicht, das Färbemittel im Lösungsmittel aufzulösen, und die folgende Gleichung erfüllt: X1/X2 * Y > 5,5 zum Färben eines Dentalkeramikgerüsts.

2. Verwendung nach Anspruch 1, wobei der Komplexbildner in einem zumindest stöchiometrischen Verhältnis in Bezug auf die im Färbemittel beinhalteten Metallionen verwendet wird.

3. Verwendung nach einem der vorstehenden Ansprüche, wobei der Komplexbildner aus der Gruppe bestehend aus Kronenethern, Cryptanden, Ethylendiamintriacetat und dessen Salzen, Ethylendiamintetraacetat (EDTA) und dessen Salzen, Nitrilotriacetat (NTA) und dessen Salzen, Citronensäure und deren Salzen, Triethylentetramin und Porphin ausgewählt wird.

4. Verwendung nach einem der vorstehenden Ansprüche, wobei das Färbemittel Atome aus der Gruppe, bestehend aus Seltenerdelementen und/oder aus den Untergruppen der Seltenerdelemente und/oder aus Übergangsmetallen der Gruppen IIIA, IVA, VA, VIA, VIIA, VIIIA, IB und/oder IIB umfasst.

5. Verwendung nach einem der vorstehenden Ansprüche, wobei es sich bei dem Färbemittel um ein Salz handelt, das Metallkationen und -anionen umfasst, wobei die Anionen aus der Gruppe bestehend aus $OAc^-$, $NO_3^-$, $NO_2^-$, $CO_3^{2-}$, $HCO_3^-$, $ONC^-$, $SCN^-$, $SO_4^2$, $SO_3^{2-}$, Gluturat, Lactat, Gluconat, Propionat, Butyrat, Glucuronat, Benzoat und Phenolat ausgewählt werden.

6. Verwendung nach einem der vorstehenden Ansprüche, wobei das Lösungsmittel aus der Gruppe bestehend aus Wasser, Alkoholen oder dipolaren aprotischen Flüssigkeiten, apolaren Flüssigkeiten oder Mischungen aus Wasser mit Alkoholen und/oder dipolaren aprotischen Flüssigkeiten ausgewählt wird.

7. Verwendung nach einem der vorstehenden Ansprüche, wobei die Färbelösung mindestens eines der folgenden Merkmale aufweist:

   • dynamische Viskosität weniger als 100 mPa*s bei 23 °C,
   • für Wasser enthaltende Lösungen einen pH-Wert im Bereich von 2 bis 9,
   • transparent gegenüber sichtbarem Licht.

8. Verwendung nach einem der vorstehenden Ansprüche, wobei die Färbelösung weniger als 1 Gew.-% Halogen umfasst.

9. Verwendung nach einem der vorstehenden Ansprüche, wobei die Färbelösung Folgendes umfasst

   a) ein Lösungsmittel in einer Menge von 30 bis 96 Gew.-%,
   b) ein Färbemittel, das Metallionen in einer Menge von 0,1 bis 20 Gew.-% umfasst,
   c) einen Komplexbildner mit mindestens 3 Komplexpositionen in einer Menge von 2 bis 60 Gew.-%, und
   d) wahlweise Additive in einer Menge von 0,1 bis 12 Gew.-%.

10. Verwendung, wie in einem der vorstehenden Ansprüche beschrieben, wobei das Lösungsmittel Wasser umfasst, das Färbemittel Er-, Pr- und/oder Fe-Salze umfasst und der Komplexbildner EDTA umfasst.

11. Verfahren zum Färben eines Dentalkeramikgerüsts und/oder zum Verringern der Sinterverformung eines Dentalkeramikgerüsts, das die folgenden Schritte umfasst

   a) Bereitstellen einer Färbelösung, wie in einem der vorstehenden Ansprüche beschrieben,
   b) Bereitstellen eines Dentalkeramikgerüsts,
   c) Behandeln des Keramikgerüsts mit der Lösung aus a),
   d) wahlweises Trocknen des behandelten Keramikgerüsts, und
   e) wahlweises Brennen des behandelten Keramikgerüsts.

12. Verfahren nach Anspruch 11, wobei das Dentalkeramikgerüst $ZrO_2$ und/ oder $Al_2O_3$ umfasst.

13. Verfahren nach Anspruch 12, wobei das Dentalkeramikgerüst die Form einer Krone, eines Inlays, Onlays, Abutments oder einer Brücke aufweist.

14. Verfahren nach einem der Ansprüche 12 oder 13, wobei die Keramik vorgesintert ist.

15. Verwendung eines Komplexbildners zum Verringern der Sinterverformung des Dentalkeramikgerüsts beim Brennen, wobei die Verwendung den Behandlungsschritt des teilweise gesinterten Keramikgerüsts mit einer Färbelösung, wie in einem der Ansprüche 1 bis 10 beschrieben, und das Sintern des teilweise gesinterten Keramikgerüsts zu voller Dichte umfasst.

**Revendications**

1. Utilisation d'une solution colorante comprenant :

   • un solvant,
   • un agent complexant avec un nombre Y de ligands de coordination, l'agent complexant étant présent en une quantité de X1 mol et possédant au moins 2 ligands de coordination,
   • un agent colorant comprenant des ions métalliques, les ions métalliques étant présents en une quantité de X2 mol,
   dans laquelle l'agent complexant est présent en une quantité suffisante pour dissoudre l'agent colorant dans le solvant, et satisfait l'équation : X1/X2 * Y > 5,5 pour colorer une structure céramique dentaire.

2. Utilisation selon la revendication 1, dans laquelle l'agent complexant est utilisé au moins dans un rapport stoechiométrique par rapport aux ions métalliques présents dans l'agent colorant.

3. Utilisation selon l'une quelconque des revendications précédentes, dans laquelle l'agent complexant est choisi dans le groupe constitué d'éthers en couronne, cryptands, éthylènediaminetriacétate et ses sels, éthylènediaminetétraacétate (EDTA) et ses sels, nitrilotriacétate (NTA) et ses sels, acide citrique et ses sels, triéthylènetétramine et porphine.

4. Utilisation selon l'une quelconque des revendications précédentes, dans laquelle l'agent colorant comprend des atomes du groupe constitué des éléments de terres rares et/ou des sous-groupes des éléments de terres rares et/ou des sels de métaux de transition des groupes IIIA, IVA, VA, VIA, VIIA, VIIIA, IB et/ou IIB.

5. Utilisation selon l'une quelconque des revendications précédentes, dans laquelle l'agent colorant est un sel comprenant des cations métalliques et des anions, dans laquelle les anions sont choisis dans le groupe constitué de $OAc^-$, $NO_3^-$, $NO_2^-$, $CO_3^{2-}$, $HCO_3^-$, $ONC^-$, $SCN^-$, $SO4^2$, $SO_3^{2-}$, gluturate, lactate, gluconate, propionate, butyrate, glucuronate, benzoate et phénolate.

6. Utilisation selon l'une quelconque des revendications précédentes, dans laquelle le solvant est choisi dans le groupe constitué d'eau, alcools ou liquides aprotiques dipolaires, liquides apolaires ou mélanges d'eau avec des alcools et/ou des liquides aprotiques dipolaires.

7. Utilisation selon l'une quelconque des revendications précédentes, la solution colorante possédant au moins une des caractéristiques suivantes :

   • une viscosité dynamique inférieure à 100 mPa*s à 23 °C,
   • pour des solutions contenant de l'eau, une valeur de pH dans la plage comprise entre 2 et 9,
   • transparente à la lumière visible.

8. Utilisation selon l'une quelconque des revendications précédentes, dans laquelle la solution colorante comprend moins de 1 % en poids d'halogène.

9. Utilisation selon l'une quelconque des revendications précédentes, la solution colorante comprenant

   a) un solvant en une quantité de 30 à 96 % en poids,
   b) un agent colorant comprenant des ions métalliques en une quantité de 0,1 à 20 % en poids,
   c) un agent complexant avec au moins 3 positions complexantes en une quantité de 2 à 60 % en poids, et
   d) facultativement des additifs en une quantité de 0,1 à 12 % en poids.

10. Utilisation selon l'une quelconque des revendications précédentes, dans laquelle le solvant comprend de l'eau, l'agent colorant comprend des sels d'Er, de Pr et/ou de Fe et l'agent complexant comprend de l'EDTA.

11. Procédé de coloration d'une structure céramique dentaire et/ou de réduction de la déformation de frittage d'une structure céramique dentaire, comprenant les étapes consistant à

   a) fournir une solution colorante telle que décrite dans l'une quelconque des revendications précédentes,
   b) fournir une structure céramique dentaire,
   c) traiter la structure céramique avec la solution de a),
   d) facultativement sécher la structure céramique traitée, et
   e) facultativement cuire la structure céramique traitée.

12. Procédé selon la revendication 11, dans lequel la structure céramique dentaire comprend $ZrO_2$ et/ou $Al_2O_3$.

13. Procédé selon la revendication 12, la structure céramique dentaire possédant la forme d'une couronne, d'une prothèse intrinsèque (inlay), une prothèse extrinsèque (onlay), un ancrage ou un bridge.

14. Procédé selon l'une quelconque des revendications 12 ou 13, dans lequel la céramique est préalablement frittée.

15. Utilisation d'un agent complexant pour réduire la déformation de frittage d'une structure céramique dentaire durant la cuisson, l'utilisation comprenant l'étape consistant à traiter une structure céramique partiellement frittée avec une solution colorante selon l'une quelconque des revendications 1 à 10 et à fritter la structure céramique partiellement frittée à pleine densité.

*FIG. 1*

*FIG. 2*

*FIG. 3*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19619168 A1
- WO 2004110959 A
- DE 19619165 C1
- WO 0046168 A1

- US 6709694 B1
- DE 10052203 A1
- US 6756421 B
- WO 2006108677 A1